(19) Europäisches Patentamt
European Patent Office
Office européen des brevets

(11) EP 0 924 275 B1

(12) # EUROPÄISCHE PATENTSCHRIFT

(45) Veröffentlichungstag und Bekanntmachung des Hinweises auf die Patenterteilung:
**26.04.2000 Patentblatt 2000/17**

(51) Int Cl.[7]: **C09D 183/04**, C08G 77/12, C08G 77/48

(21) Anmeldenummer: **98119505.0**

(22) Anmeldetag: **15.10.1998**

(54) **Additionsvernetzbare Organosiliciumverbindungen enthaltende Zusammensetzungen**

Compositions containing addition reaction-curable organosilicon compounds

Compositions contenant des composés d'organosilice réticulables par addition

(84) Benannte Vertragsstaaten:
**BE DE FR GB NL**

(30) Priorität: **11.12.1997 DE 19755151**

(43) Veröffentlichungstag der Anmeldung:
**23.06.1999 Patentblatt 1999/25**

(73) Patentinhaber: **Wacker-Chemie GmbH**
**81737 München (DE)**

(72) Erfinder:
- **Herzig, Christian Dr.**
  **83329 Waging am See (DE)**
- **Zöllner, Oliver**
  **84359 Simbach am Inn (DE)**

(74) Vertreter: **Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
**EP-A- 0 523 660** **DE-A- 19 602 663**

EP 0 924 275 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft vernetzbare Zusammensetzungen enthaltend

(A) Organosiliciumverbindungen, die Reste mit aliphatischen Kohlenstoff-Kohlenstoff-Mehrfachbindungen aufweisen,
(B) Si-gebundene Wasserstoffatome aufweisende Organosiliciumverbindungen,
(C) die Anlagerung von Si-gebundenen Wasserstoff an aliphatische Mehrfachbindung fördernde Katalysatoren

und gegebenenfalls
(D) die Anlagerung von Si-gebundenem Wasserstoff an aliphatische Mehrfachbindung bei Raumtemperatur verzögernde Mittel
sowie die Verwendung der vernetzbaren Zusammensetzungen zur Herstellung von klebrige Stoffe abweisenden Überzügen. Weiterhin betrifft die Erfindung Si-gebundene Wasserstoffatome aufweisende Organosiliciumverbindungen sowie ein Verfahren zu deren Herstellung.
Als Vernetzer für aliphatisch ungesättigte Organopolysiloxane werden nahezu ausschließlich Organopolysiloxane mit Hydrogenmethylsiloxaneinheiten verwendet, im einfachsten Fall mit Triorganosiloxygruppen endblockiertes Hydrogenmethylpolysiloxan. Zur Steigerung der Reaktivität hat es sich bewährt, zwi schen die Hydrogenmethylsiloxaneinheiten durch Equilibrieren Dimethylsiloxaneinheiten einzubauen. Diese Maßnahmen sind jedoch nur sehr begrenzte Verbesserungen.
Außer diesen auf Hydrogenmethylsiloxaneinheiten basierenden Vernetzern sind auch solche ohne Methylgruppen bekannt. In DE-B 1 955 511 bzw. der korrespondierenden US-A 3,615,272 sind Harze aus Hydrogensiloxaneinheiten, also trifunktionellen Einheiten, beschrieben. Zur Verwendung in additionshärtenden Organopolysiloxanzusammensetzungen als Vernetzer sind solche Polymere allerdings nur von sehr eingeschränktem Nutzen, da sie sich kaum in den vernetzbaren Diorganopolysiloxanen lösen.
Aus EP-A 568 318 sind Organopolysiloxane mit trifunktionellen Siloxaneinheiten und monofunktionellen Siloxaneinheiten mit Si-gebundenem Wasserstoff bekannt. Gemäß der EP-A 568 318 werden T-Einheiten in Form von Organosiloxaneinheiten mit Hydrogendimethylsiloxygruppen endgestoppert, wobei zwischen diesen Gruppen eine unterschiedliche Anzahl von Dimethylsiloxan- oder Hydrogenmethylsiloxaneinheiten eingebaut sein kann.
Gemäß DE-A 37 16 372 werden Organopolysiloxane mit Si-gebundenen Wasserstoffatomen und 3 bis 5 Siliciumatomen je Molekül aus $[H(CH_3)_2Si]_2O$ und Trialkoxysilanen in einem hydrolytischen Verfahren hergestellt.
Aus DE-A 195 22 144 (Wacker-Chemie GmbH, offengelegt am 02. Januar 1997) sind Polyadditionsprodukte mit Hydrogendimethylsiloxaneinheiten bekannt, die durch Umsetzung von Kohlenwasserstoffen mit mindestens drei endständigen Doppelbindungen mit kurzkettigen $\alpha,\omega$-Dihydrogensiloxanen hergestellt werden.
In DE-A 196 02 663 (Wacker-Chemie GmbH, offengelegt am 31. Juli 1997) sind Carbosiloxanvernetzer mit Endeinheiten der allgemeinen Formel $H_aR_{3-a}SiO_{1/2}$ (wobei a bevorzugt 1 und R ein einwertiger Kohlenwasserstoffrest ist) und Carbostruktureinheiten beschrieben, die gegebenenfalls Einheiten der allgemeinen Formel $H_cR_dSiO_{4-c-d/2}$ (wobei c bevorzugt 0 und die Summe c+d bevorzugt 2 ist) enthalten, d.h. sie können auch difunktionelle Siloxaneinheiten aufweisen. Ein wesentliches Kennzeichen der Carbosiloxanvernetzer ist dabei, daß die Gesamtzahl der in den Endeinheiten enthaltenen Si-gebundenen Wasserstoffatome größer ist als die Gesamtzahl aller über die Carbostruktureinheit miteinander verbundenen Si-Atome.
Es bestand die Aufgabe, Si-gebundene Wasserstoffatome aufweisende Organosiliciumverbindungen bereitzustellen, die mit Organosiliciumverbindungen, die Reste mit aliphatischen Kohlenstoff-Kohlenstoff-Mehrfachbindungen aufweisen, in Gegenwart von die Anlagerung von Si-gebundenem Wasserstoff an aliphatische Mehrfachbindung fördernden Katalysatoren rasch vernetzen, wobei höhere Vernetzungsgeschwindigkeiten als bisher erzielt werden. Weiterhin bestand die Aufgabe, vernetzbare Zusammensetzungen bereitzustellen, die zur Herstellung von klebrige Stoffe abweisenden Überzügen geeignet sind. Die Aufgabe wird durch die Erfindung gelöst.
Gegenstand der Erfindung sind vernetzbare Zusammensetzungen enthaltend

(A) Organosiliciumverbindungen, die Reste mit aliphatischen Kohlenstoff-Kohlenstoff-Mehrfachbindungen aufweisen
(B) Si-gebundene Wasserstoffatome aufweisende Organosiliciumverbindungen
(C) die Anlagerung von Si-gebundenem Wasserstoff an aliphatische Mehrfachbindung fördernde Katalysatoren und gegebenenfalls
(D) die Anlagerung von Si-gebundenem Wasserstoff an aliphatische Mehrfachbindung bei Raumtemperatur verzögernde Mittel,

dadurch gekennzeichnet, daß als mindestens ein Teil der (B) Si-gebundene Wasserstoffatome aufweisenden Orga-

nosiliciumverbindungen Organosiliciumverbindungen ($B^1$) enthaltend

(a) Einheiten der allgemeinen Formel

$$H_aR_{2-a}SiO_{2/2} \qquad (I)$$

wobei R gleich oder verschiedenen ist und einen einwertigen, von aliphatischen Mehrfachbindungen freien, gegebenenfalls halogenierten Kohlenwasserstoffrest mit 1 bis 8 Kohlenstoffatom(en) je Rest bedeutet und a 0, 1 oder 2 ist,
mit der Maßgabe, daß mindestens 20 Mol-% der Einheiten der Formel (I) solche mit a gleich 1 oder 2 sind,
(b) Carbostruktureinheiten G (II)
wobei G gleich oder verschieden ist und einen dreiwertigen bis zehnwertigen aliphatischen Kohlenwasserstoffrest mit 7 bis 30 Kohlenstoffatomen je Rest bedeutet, der ein oder mehrere Heteroatome, ausgewählt aus der Gruppe von Sauerstoff, Bor, Silicium, Zinn oder Titan enthalten kann, mit der Maßgabe, daß über G mindestens drei Si-Atome miteinander verbunden sind,
(c) Einheiten der allgemeinen Formel

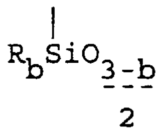 (III)

und/oder

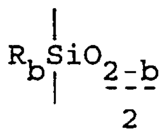 (III')

wobei R die oben dafür angegebene Bedeutung hat,
b 0, 1 oder 2 ist, mit der Maßgabe, daß b in Formel (III') nicht 2 ist, und
mit der Maßgabe, daß die Einheiten der Formel (III) bzw. (III') über die Si-Atome mit den Carbostruktureinheiten G verbunden sind
und

(d) Einheiten der allgemeinen Formel

$$H_cR_{3-c}SiO_{1/2} \qquad (IV)$$

wobei R die oben dafür angegebene Bedeutung hat, c 0, 1 oder 2 ist,
mit der Maßgabe, daß die Organosiliciumverbindungen ($B^1$) durchschnittlich mindestens 6 Si-gebundene Wasserstoffatome enthalten,
verwendet werden.

Gegenstand der Erfindung sind weiterhin Si-gebundene Wasserstoffatome aufweisende Organosiliciumverbindungen ($B^1$) enthaltend

(a) Einheiten der allgemeinen Formel

$$H_aR_{2-a}SiO_{2/2} \qquad (I)$$

wobei R und a die oben dafür angegebene Bedeutung haben, mit der Maßgabe, daß mindestens 20 Mol-% der Einheiten der Formel (I) solche mit a gleich 1 oder 2 sind,
(b) Carbostruktureinheiten G (II)
wobei G gleich oder verschieden ist und einen dreiwertigen bis zehnwertigen aliphatischen Kohlenwasserstoffrest mit 7 bis 30 Kohlenstoffatomen je Rest bedeutet, der ein oder mehrere Heteroatome, ausgewählt aus der Gruppe von Sauerstoff, Bor, Silicium, Zinn oder Titan enthalten kann, mit der Maßgabe, daß über G mindestens drei Si-Atome miteinander verbunden sind,
(c) Einheiten der allgemeinen Formel

$$\overset{|}{R_bSiO_{\frac{3-b}{2}}} \qquad (III)$$

und/oder

$$R_b\overset{|}{\underset{|}{Si}}O_{\frac{2-b}{2}} \qquad (III')$$

wobei R und b die oben dafür angegebene Bedeutung haben, mit der Maßgabe, daß die Einheiten der Formel (III) bzw. (III') über die Si-Atome mit den Carbostruktureinheiten G verbunden sind
und
(d) Einheiten der allgemeinen Formel

$$H_cR_{3-c}SiO_{1/2} \qquad (IV)$$

wobei R und c die oben dafür angegebene Bedeutung haben, mit der Maßgabe, daß die Si-gebundene Wasserstoffatome aufweisenden Organosiliciumverbindungen ($B^1$) durchschnittlich mindestens 6 Si-gebundene Wasserstoffatome enthalten.

Gegenstand der Erfindung ist weiterhin ein Verfahren zur Herstellung der Si-gebundenen Wasserstoffatome aufweisenden Organosiliciumverbindungen ($B^1$), dadurch gekennzeichnet, daß in einem ersten Schritt aliphatische Mehrfachbindungen aufweisende aliphatische Kohlenwasserstoffverbindungen (1) mit 7 bis 30 Kohlenstoffatomen, die jeweils ein oder mehrere Heteroatome, ausgewählt aus der Gruppe von Sauerstoff, Bor, Silicium, Zinn und Titan enthalten können,
mit Siloxanen (2) der allgemeinen Formel

$$R^1R_2SiO(R_2SiO)_dSiR_2R^1$$

wobei

R die oben dafür angegebene Bedeutung hat,
$R^1$ die gleiche Bedeutung wie R hat oder ein Wasserstoffatom bedeutet, mit der Maßgabe, daß mindestens 50 Mol-% der Reste $R^1$ Wasserstoffatome sind und
d 0 oder eine ganze Zahl im Wert von 1 bis 200 ist,
in Gegenwart von die Anlagerung von Si-gebundenem Wasserstoff an aliphatische Mehrfachbindung fördernden Katalysatoren (3) umgesetzt werden,
wobei das eingesetzte Verhältnis von Si-gebundenem Wasserstoff in Siloxan (2) zu aliphatischer Doppelbindung in Kohlenwasserstoffverbindung (1) 1,0 bis 5,0 beträgt,

die so erhaltenen Verbindungen gegebenenfalls mit $C_4$- bis $C_{22}$-Alkenen (4), die eine endständige aliphatische Doppelbindung aufweisen, in Gegenwart von die Anlagerung von Si-gebundenem Wasserstoff an aliphatische Mehrfachbindung fördernden Katalysatoren (3) weiter umgesetzt werden,
und in einem zweiten Schritt
die im ersten Verfahrensschritt erhaltenen Verbindungen mit Si-gebundene Wasserstoffatome aufweisenden Organopolysiloxanen (5), die Einheiten der Formel (I) enthalten, equilibriert werden,
mit der Maßgabe, daß die so erhaltenen Si-gebundene Wasserstoffatome aufweisenden Organosiliciumverbindungen ($B^1$) durchschnittlich mindestens 20 Mol-% Einheiten der Formel (I) mit a gleich 1 oder 2 und mindestens 6 Si-gebundene Wasserstoffatome aufweisen.

Ein wesentliches Kennzeichen der erfindungsgemäßen, Si-gebundene Wasserstoffatome aufweisenden Organosiliciumverbindungen ($B^1$) ist, daß je Molekül die Gesamtzahl der terminalen Si-gebundenen Wasserstoffatome, also die in den Endeinheiten der Formel (IV) enthaltenen Si-gebundenen Wasserstoffatome, kleiner ist als die Gesamtzahl aller über die Carbostruktureinheit G je Molekül miteinander verbundenen Si-Atome.
Die erfindungsgemäßen, Si-gebundene Wasserstoffatome aufweisenden Organosiliciumverbindungen ($B^1$) weisen eine gute Löslichkeit in dem oben beschriebenen Bestandteil (A) der vernetzbaren Zusammensetzung auf.
Die erfindungsgemäßen, Si-gebundene Wasserstoffatome aufweisenden Organosiliciumverbindungen ($B^1$) besitzen vorzugsweise eine Viskosität von 4 bis 5 000 $mm^2 \cdot s^{-1}$ bei 25°C, bevorzugt 20 bis 1 000 $mm^2 \cdot s^{-1}$ bei 25°C, und besonders bevorzugt 40 bis 400 $mm^2 \cdot s^{-1}$ bei 25°C.
Die erfindungsgemäßen, Si-gebundene Wasserstoffatome aufweisenden Organosiliciumverbindungen ($B^1$) enthalten durchschnittlich vorzugsweise 6 bis 500 Si-gebundene Wasserstoffatome, bevorzugt 6 bis 300 Si-gebundene Wasserstoffatome, besonders bevorzugt 8 bis 100 Si-gebundene Wasserstoffatome und speziell bevorzugt 30 bis 60 Si-gebundene Wasserstoffatome.
Die erfindungsgemäßen, Si-gebundene Wasserstoffatome aufweisenden Organosiliciumverbindungen ($B^1$) besitzen ein Hydrogenequivalentgewicht vorzugsweise von 90 bis 400 g pro Mol Si-gebundenen Wasserstoff, bevorzugt von 90 bis 200 g pro Mol Si-gebundenen Wasserstoff und besonders bevorzugt von 120 bis 180 g pro Mol Si-gebundenen Wasserstoff.
Der Rest R in den Si-gebundenen Wasserstoffatomen aufweisenden Organosiliciumverbindungen ($B^1$) ist frei von aliphatischen Mehrfachbindungen, damit es zu keiner Eigenvernetzung kommt, die zu Unlöslichkeiten führt.
Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Cycloalkylreste, wie Cyclopentyl-, Cyclohexyl-, Cycloheptylreste und Methylcyclohexylreste; Arylreste, wie der Phenylrest; Alkarylreste, wie o-, m-, p-Tolylreste, Xylylreste und Ethylphenylreste und Aralkylreste, wie der Benzylrest, der $\alpha$- und der $\beta$-Phenylethylrest. Bevorzugt ist der Methylrest.
Beispiele für halogenierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m-, und p-Chlorphenylrest.

a ist bevorzugt 0 oder 1.

b ist bevorzugt 1 oder 2, besonders bevorzugt 2.

c ist bevorzugt 0 oder 1.

Besonders bevorzugte Beispiele für die Endeinheit der Formel (IV) sind die Hydrogendimethylsiloxaneinheit und die Trimethylsiloxaneinheit.
Besonders bevorzugte Beispiele für die Einheit der Formel (I) sind die Hydrogenmethylsiloxaneinheit und die Dimethylsiloxaneinheit.
Das Verhältnis der Si-gebundenen Wasserstoffatome in den Einheiten der Formel (I) (bevorzugt $HRSiO_{2/2}$-Einheiten), zu den Si-gebundenen Wasserstoffatomen in den Einheiten der Formel (IV) (bevorzugt $HR_2SiO_{1/2}$-Einheiten), beträgt vorzugsweise durchschnittlich 8 : 1 bis 100 : 1, bevorzugt 10 : 1 bis 60 : 1.
Die Si-gebundenen Wasserstoffatome können aber auch ausschließlich in den Einheiten der Formel (I) enthalten sein, und nicht in den endständigen Einheiten der Formel (IV), d.h. c hat in der Formel (IV) dann den Wert 0.
Als Carbostruktureinheit G werden bevorzugt Reste der allgemeinen Formel

$$R^4(CR^3H\text{-}CH_2\text{-})_x \qquad (II),$$

wobei

$R^4$ einen dreiwertigen bis zehnwertigen aliphatisch gesättigten Kohlenwasserstoffrest mit 7 bis 10 Kohlenstoffatomen, der ein oder mehrere Heteroatome, ausgewählt aus der Gruppe von Sauerstoff, Bor, Silicium, Zinn und Titan enthalten kann,
$R^3$ ein Wasserstoffatom oder einen Alkylrest mit 1 bis 6 Kohlenstoffatomen je Rest und
x 3, 4, 5, 6, 7, 8, 9 oder 10, insbesondere 3, 4, 5 und 6, besonders bevorzugt 3, bedeutet,

eingesetzt.

Beispiele für Alkylreste $R^3$ sind der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert.-Pentylrest und Hexylreste, wie der n-Hexylrest. Bevorzugt ist $R^3$ ein Wasserstoffatom.

Beispiele für dreiwertige Carbostruktureinheiten G sind solche der Formel

$$(-CH_2CH_2)_3C_6H_9$$

$$(-CH_2CH_2)_3C_6H_3$$

$$(-CH_2CH_2CH_2OCH_2)_3C-CH_2CH_3$$

$$(-CH_2CH_2CH_2)_3B$$

$$(-CH_2CH_2)_3SiCH_3$$

und

$$(-CH_2CH_2)_3SnC_4H_9.$$

Beispiele für vierwertige Carbostruktureinheiten G sind solche der Formel

$$(-CH_2CH_2)_4C_4H_4$$

$$(-CH_2CH_2)_4Si$$

$$(-CH_2CH_2)_4Sn$$

$$(-CH_2CH_2)_4Ti$$

$$(-CH_2CH_2CH_2O)_2CH-CH(OCH_2CH_2CH_2-)_2$$

und

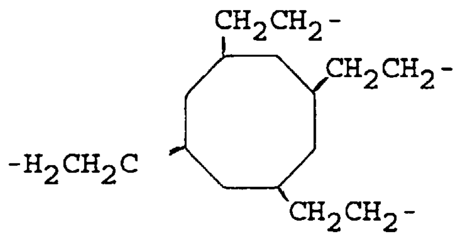 .

Höherwertige Carbostruktureinheiten G können solche der Formel

$$(-CH_2CH_2)_3SiCH_2CH_2Si(CH_2CH_2-)_3$$

oder gesättigte Oligomere von Dienen wie Butadien oder Isopren sein.

Bevorzugt als Carbostruktureinheiten G sind solche mit einer Wertigkeit von 3, 4, 5 und 6, besonders bevorzugt sind dreiwertige Carbostruktureinheiten.

Bevorzugt enthalten die Si-gebundene Wasserstoffatome aufweisenden Organosiliciumverbindungen ($B^1$) als Einheiten (c) Einheiten der Formel (III).

Beispiele für Si-gebundene Wasserstoffatome aufweisende Organosiliciumverbindungen ($B^1$) sind verzweigte Verbindungen, die hergestellt werden können, indem in einer 1. Stufe Trivinylmethylsilan oder 1,2,4-Trivinylcyclohexan mit einem stöchiometrischen Überschuß von linearen Siloxanen (2) unter Verwendung von Katalysatoren (3) umgesetzt wird und dieses verzweigte Vorprodukt in einer 2. Stufe mit einem Eqilibrat aus Hydrogenmethylsiloxan-, Dimethylsiloxan- und Trimethylsiloxaneinheiten oder einem endständige Trimethylsiloxaneinheiten aufweisenden Hydrogenmethylpolysiloxan equilibriert wird. Zur Einstellung der Viskosität oder des Gehaltes an Si-gebundenem Wasserstoff können in der 2. Stufe cyclische oder lineare Dialkyl(poly)siloxane in geeigneten Mengen zugesetzt werden.

Die bei dem erfindungsgemäßen Verfahren im ersten Verfahrensschritt eingesetzten Kohlenwasserstoffverbindungen (1) enthalten vorzugsweise drei bis zehn aliphatische Doppelbindungen, bevorzugt drei bis sechs aliphatische Doppelbindungen, besonders bevorzugt drei aliphatische Doppelbindungen.

Als Kohlenwasserstoffverbindungen (1) werden bevorzugt solche der allgemeinen Formel

$$R^4\ (CR^3{=}CH_2)_x,$$

wobei $R^4$, $R^3$ und x die oben dafür angegebene Bedeutung haben, eingesetzt.

Beispiele für Kohlenwasserstoffverbindung (1) sind 1,2,4-Trivinylcyclohexan, 1,3,5-Trivinylcyclohexan, 1,3,5-Trivinylbenzol, Triallylbor, Trimethylölpropantriallylether, Trivinylmethylsilan, Trivinylbutylzinn, Tetravinylcyclobutan, Tetravinylidencyclobutan, Tetravinyltitan, 1,1,2,2-Tetraallyloxyethan, Cyclooctatetraen, 1,3,5,7-Tetravinylcyclooctan, 1,2-Bis(trivinylsilyl)ethan, Oligobutadien, Oligoisopren.

Bei dem erfindungsgemäßen Verfahren kann im ersten Verfahrensschritt eine Art von Kohlenwasserstoffverbindung (1) oder es können verschiedene Arten von Kohlenwasserstoffverbindungen (1) eingesetzt werden.

Bevorzugt werden bei dem erfindungsgemäßen Verfahren als Siloxane (2) solche der allgemeinen Formel

$$HR_2SiO(R_2SiO)_dSiR_2H$$

eingesetzt, wobei R und d die oben dafür angegebene Bedeutung haben.

Bei dem erfindungsgemäßen Verfahren kann im ersten Verfahrensschritt eine Art von Siloxan (2) oder es können verschiedene Arten von Siloxanen (2) eingesetzt werden.

Bei dem erfindungsgemäßen Verfahren beträgt in dem ersten Verfahrensschritt das Verhältnis von Si-gebundenem Wasserstoff Siloxan (2) zu aliphatischer Doppelbindung in der Kohlenwasserstoffverbindung (1) vorzugsweise 1,5 bis 5,0, bevorzugt 1,5 bis 3,5, besonders bevorzugt 1,6 bis 2,5.

Bei dem erfindungsgemäßen Verfahren können als Siloxane (2) Equilibrate aus $HR_2SiO_{1/2}$-, $R_2SiO$- und $R_3SiO_{1/2}$-Einheiten, wie Equilibrate aus Hydrogendimethylsiloxan-, Trimethylsiloxan- und Dimethylsiloxaneinheiten, eingesetzt werden. Um Si-gebundene Wasserstoffatome aufweisende Organosiliciumverbindungen ($B^1$) mit c gleich 0, d.h. mit endständigen Einheiten der Formel (IV) ohne Si-gebundene Wasserstoffatome, zu erhalten, können im

ersten Verfahrensschritt die so erhaltenen Verbindungen, soweit sie noch endständige Einheiten der Formel $HR_2SiO_{1/2}$ aufweisen, mit Alkenen (4), wie 1-Octen, 1-Dodecen, 1-Hexadecen und 1-Octadecen, weiter umgesetzt werden. Alkene (4) werden dabei in solchen Mengen eingesetzt, daß das Verhältnis von aliphatischer Doppelbindung in Alkenen (4) zu Si-gebundenem Wasserstoff in den im ersten Verfahrensschritt erhaltenen Verbindungen vorzugsweise 1,0 : 1 bis 1,5 : 1 beträgt.

Als die Anlagerung von Si-gebundenem Wasserstoff an aliphatische Doppelbindung fördernde Katalysatoren (3) können auch bei dem erfindungsgemäßen Verfahren die gleichen Katalysatoren eingesetzt werden, die auch bisher zur Förderung der Anlagerung von Si-gebundenem Wasserstoff an aliphatische Mehrfachbindung eingesetzt werden konnten. Bei den Katalysatoren (3) handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. $PtCl_4$, $H_2PtCl_6*6H_2O$, $Na_2PtCl_4*4H_2O$, Platin-Olefin-Komplexe, Platin-Alkohol-Komplexe, Platin-Vinylsiloxankomplexe, wie Platin-1,3-Divinyl-1,1,3,3-tetramethyldisiloxankomplexe mit oder ohne Gehalt an nachweisbarem anorganisch gebundenem Halogen, Trimethylendipyridinplatindichlorid, Dicyclopentadienplatindichlorid, Cyclooctadien-Platindichlorid, Norbornadien-Platindichlorid, sowie Umsetzungsprodukte von Platintetrachlorid mit Olefin.

Der Katalysator (3) wird im ersten Verfahrensschritt vorzugsweise in Mengen von 1 bis 50 Gew.-ppm (Gewichtsteilen je Million Gewichtsteilen), bevorzugt in Mengen von 1 bis 5 Gew.-ppm, jeweils berechnet als elementares Platin und bezogen auf das Gesamtgewicht von Kohlenwasserstoffverbindung (1) und Siloxan (2), verwendet.

Der erste Verfahrensschritt wird vorzugsweise beim Druck der umgebenden Atmosphäre, also etwa bei 1020 hPa (abs.), durchgeführt, es kann aber auch bei höheren oder niedrigeren Drücken durchgeführt werden. Ferner wird der erste Verfahrensschritt vorzugsweise bei einer Temperatur von 20°C bis 150°C, bevorzugt 20°C bis 120°C, besonders bevorzugt 40°C bis 120°C durchgeführt.

In dem ersten Verfahrensschritt können inerte, organische Lösungsmittel mitverwendet werden, obwohl die Mitverwendung von inerten, organischen Lösungsmitteln nicht bevorzugt ist. Beispiele für inerte, organische Lösungsmittel sind Toluol, Xylol, Octanisomere, Butylacetat, 1,2-Dimethoxyethan, Tetrahydrofuran und Cyclohexan. Inerte Siloxane wie Hexamethyldisiloxan oder cyclische Dimethylsiloxane mit 3 bis ca. 8 Siloxaneinheiten können als Lösungsmittel verwendet werden.

Die gegebenenfalls mitverwendeten, inerten organischen Lösungsmittel werden nach dem ersten Verfahrensschritt vorzugsweise destillativ entfernt.

Im zweiten Verfahrensschritt werden als Si-gebundene Wasserstoffatome aufweisende Organopolysiloxane (5) vorzugsweise solche ausgewählt aus der Gruppe bestehend aus linearen, endständige Triorganosiloxygruppen aufweisenden Organopolysiloxanen der Formel

$$R_3'SiO(SiR_2'O)_rSiR_3',$$

wobei R' die gleiche Bedeutung wie R hat oder ein Wasserstoffatom bedeutet, r 0 oder eine ganze Zahl im Wert von 1 bis 500, bevorzugt 10 bis 200, ist,
linearen, endständige Hydroxylgruppen aufweisenden Organopolysiloxanen der Formel

$$HO(SiR_2'O)_sH,$$

wobei R' die oben dafür angegebene Bedeutung hat und
s eine ganze Zahl im Wert von 1 bis 1000, bevorzugt 10 bis 500, ist,
verzweigten, gegebenenfalls Hydroxylgruppen aufweisenden Organopolysiloxanen aus Einheiten der Formel

$$R_3'SiO_{1/2},\ R_2'SiO \text{ und } R'SiO_{3/2},$$

wobei R' die oben dafür angegebene Bedeutung hat, cyclischen Organopolysiloxanen der Formel

$$(R_2'SiO)_t,$$

wobei R' die oben dafür angegebene Bedeutung hat und t eine ganze Zahl von 3 bis 12 ist,
und Mischpolymerisaten aus Einheiten der Formel

$$R_2'SiO \text{ und } R'SiO_{3/2},$$

wobei R' die oben dafür angegebene Bedeutung hat, eingesetzt.

Bevorzugte Organopolysiloxane (5) sind die der Formeln

$$R_3'SiO(SiR_2'O)_rSiR_3' \text{ und } HO(SiR_2'O)_sH.$$

Das Mengenverhältnis der bei der Equilibrierung eingesetzten Organopolysiloxane (5) und SiH-Gruppen aufweisenden Verbindungen wird durch den gewünschten Anteil der Si-gebundenen Wasserstoffatome, insbesondere den Anteil der Einheiten der Formel (I) mit a gleich 1 oder 2, in den bei der Equilibrierung erzeugten Organosiliciumverbindungen ($B^1$) und durch die gewünschte mittlere Kettenlänge bestimmt.

Bei dem Equilibrieren werden saure Katalysatoren, welche die Equilibrierung fördern, eingesetzt.

Beispiele für saure Katalysatoren sind Schwefelsäure, Phosphorsäure, Trifluormethansulfonsäure, Phosphornitridchloride und unter den Reaktionsbedingungen feste, saure Katalysatoren, wie säureaktivierte Bleicherde, saure Zeolithe, sulfonierte Kohle und sulfoniertes Styrol-Divinylbenzol-Mischpolymerisat. Bevorzugt sind Phosphornitridchloride. Phosphornitridchloride werden vorzugsweise in Mengen von 5 bis 1000 Gew.-ppm (= Teile je Million), insbesondere 50 bis 200 Gew.-ppm, jeweils bezogen auf das Gesamtgewicht der eingesetzten SiH-Gruppen aufweisenden Verbindungen und eingesetzten Organopolysiloxane (5), verwendet.

Die Equilibrierung wird vorzugsweise bei 100°C bis 150°C und beim Druck der umgebenden Atmosphäre, also etwa bei 1020 hPa (abs.) durchgeführt. Falls erwünscht, können aber auch höhere oder niedrigere Drücke angewendet werden. Das Equilibrieren wird vorzugsweise in 5 bis 20 Gew.-%, bezogen auf das Gesamtgewicht der jeweils eingesetzten SiH-Gruppen aufweisenden Verbindungen und eingesetzten Organopolysiloxane (5), mit Wasser nichtmischbarem Lösungsmittel, wie Toluol, durchgeführt. Vor dem Aufarbeiten des bei dem Equilibrieren erhaltenen Gemisches kann der Katalysator unwirksam gemacht werden.

Bei dem erfindungsgemäßen Verfahren können gegebenenfalls in einem dritten Schritt
die so erhaltenen Si-gebundene Wasserstoffatome aufweisenden Organosiliciumverbindungen ($B^1$) mit Organopolysiloxanen (6) ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, verzweigten, gegebenenfalls Hydroxylgruppen aufweisenden Organopolysiloxanen, cyclischen Organopolysiloxanen und Mischpolymerisaten aus Diorganosiloxan- und Monoorganosiloxaneinheiten, equilibriert werden,
mit der Maßgabe, daß die so erhaltenen Si-gebundene Wasserstoffatome aufweisenden Organosiliciumverbindungen ($B^1$) durchschnittlich mindestens 20 Mol-% Einheiten der Formel (I) mit a gleich 1 oder 2 und mindestens 6 Si-gebundene Wasserstoffatome aufweisen.

Das erfindungsgemäße Verfahren kann absatzweise, halbkontinuierlich oder vollkontinuierlich durchgeführt werden.

Die die erfindungsgemäßen, Si-gebundene Wasserstoffatome aufweisenden Organosiliciumverbindungen ($B^1$) enthaltenden vernetzbaren Zusammensetzungen werden vorzugsweise zur Herstellung von klebrige Stoffe abweisenden Überzügen, z.B. zur Herstellung von Trennpapieren, verwendet.

Die Herstellung der mit dem Trennpapier verbundenen Selbstklebematerialien erfolgt nach dem off-line-Verfahren oder dem inline-Verfahren. Beim off-line-Verfahren wird die Siliconzusammensetzung auf das Papier aufgetragen und vernetzt, dann, in einer darauffolgenden Stufe, gewöhnlich nach dem Aufwickeln des Trennpapiers auf eine Rolle und nach dem Lagern der Rolle, wird ein Klebstoffilm, der beispielsweise auf einem Etikettenfacepapier aufliegt, auf das beschichtete Papier aufgetragen, und der Verbund wird dann zusammengepresst. Beim in-line-Verfahren wird die Siliconzusammensetzung auf das Papier aufgetragen und vernetzt, der Siliconüberzug wird mit dem Klebstoff beschichtet, das Etikettenfacepapier wird dann auf den Klebstoff aufgetragen und der Verbund schließlich zusammengepresst.

Als Bestandteil (A) können auch bei den erfindungsgemäßen Zusammensetzungen die gleichen aliphatische Kohlenstoff-Kohlenstoff-Mehrfachbindungen aufweisenden Organosiliciumverbindungen verwendet werden, die bei allen bisher bekannten vernetzbaren Zusammensetzungen aus aliphatische Kohlenstoff-Kohlenstoff-Mehrfachbindungen aufweisenden Organosiliciumverbindungen, Si-gebundene Wasserstoffatome aufweisenden Organosiliciumverbindungen, die Anlagerung von Si-gebundenem Wasserstoff an aliphatische Mehrfachbindung fördernden Katalysatoren eingesetzt werden konnten.

Bei den erfindungsgemäßen Zusammensetzungen kann eine Art von Bestandteil (A) oder verschiedene Arten von Bestandteil (A) eingesetzt werden.

Als Organosiliciumverbindungen (A), die Reste mit aliphatischen Kohlenstoff-Kohlenstoff-Mehrfachbindungen aufweisen, werden vorzugsweise lineare oder verzweigte Organopolysiloxane aus Einheiten der allgemeinen For-

mel

$$R^5_e R^6_f SiO_{\frac{4-e-f}{2}} \qquad (V),$$

wobei $R^5$ einen einwertigen von aliphatischen Kohlenstoff-Kohlenstoff-Mehrfachbindungen freien Kohlenwasserstoffrest mit 1 bis 18 Kohlenstoffatom(en) je Rest und

$R^6$ einen einwertigen Kohlenwasserstoffrest mit mindestens einer terminalen aliphatischen Kohlenstoff-Kohlenstoff-Mehrfachbindung mit 2 bis 12 Kohlenstoffatomen je Rest bedeutet,
e 0, 1, 2 oder 3,
f 0, 1 oder 2

und die Summe e+f 0, 1, 2 oder 3 ist,
mit der Maßgabe, daß durchschnittlich mindestens 1 Rest $R^6$ je Molekül, bevorzugt mindestens 2 Reste $R^6$ je Molekül vorliegen, verwendet.

Bevorzugt als Organosiliciumverbindungen (A) sind Organopolysiloxane der allgemeinen Formel

$$R^6{}_g R^5{}_{3-g} SiO(SiR^5{}_2O)_n(SiR^5R^6O)_m SiR^5{}_{3-g} R^6{}_g \qquad (VI),$$

wobei

$R^5$ und $R^6$ die oben dafür angegebene Bedeutung haben,
g 0, 1 oder 2,
n 0 oder eine ganze Zahl von 1 bis 1500 und
m 0 oder eine ganze Zahl von 1 bis 200 ist,

mit der Maßgabe, daß mindestens ein Rest $R^6$ je Molekül, insbesondere mindestens 2 Reste $R^6$ je Molekül, enthalten sind.

Im Rahmen dieser Erfindung soll Formel (VI) so verstanden werden, daß n Einheiten -($SiR^5{}_2O$)- und m Einheiten -($SiR^5R^6O$)- in beliebiger Weise im Organopolysiloxanmolekül verteilt sein können.

Als Organosiliciumverbindungen (A) können auch Alkenylgruppen aufweisende Siloxancopolymere, wie sie in US-A 5,241,034 (Wacker-Chemie GmbH) beschrieben sind und die aus Siloxanblökken und Kohlenwasserstoffblökken bestehen, verwendet werden. Die in der US-A 5,241,034 beschriebenen Alkenylgruppen aufweisenden Siloxancopolymere gehören daher zum Inhalt der Offenbarung der Anmeldung.

Als Organosiliciumverbindungen (A) können auch aliphatisch ungesättigte Kohlenwasserstoffreste aufweisende Organopolysiloxane, wie sie in der DE 196 27 022 (Wacker-Chemie GmbH) oder DE 197 01 393 (Wacker-Chemie GmbH) beschrieben sind, verwendet werden. Die in DE 196 27 022 beschriebenen Organopolysiloxane enthalten trifunktionelle (T) und/oder tetrafunktionelle (Q) Einheiten mit ungesättigten Kohlenwasserstoffresten. Die in DE 196 27 022 und DE 197 01 393 beschriebenen Organopolysiloxane gehören daher zum Inhalt der Offenbarung der Anmeldung.

Die Organosiliciumverbindungen (A) besitzen vorzugsweise eine durchschnittliche Viskosität von 100 bis 100 000 mPa·s bei 25°C, bevorzugt 100 bis 10 000 mPa·s bei 25°C, besonders bevorzugt 100 bis 500 mPa.s bei 25°C.

Beispiele für Kohlenwasserstoffreste $R^5$ sind Alkylreste, wie der Methyl-, Ethyl-, n-Propyl-, iso-Propyl-, n-Butyl-, iso-Butyl-, tert.- Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest, Dodecylreste, wie der n-Dodecylrest; Octadecylreste, wie der n-Octadecylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der $\alpha$- und der $\beta$-Phenylethylrest.

Beispiele für Reste $R^6$ sind Alkenylreste, wie der Vinyl-, 5-Hexenyl-, 2,4-Divinylcyclohexylethyl-, 3,4-Divinylcyclo-hexylethyl-, 2-Propenyl-, 3-Butenyl- und 4-Pentenylrest; und Alkinylreste, wie der Ethinyl- und 2-Propinylrest.

Die erfindungsgemäßen, Si-gebundene Wasserstoffatome aufweisenden Organosiliciumverbindungen ($B^1$) können in den bekannten vernetzbaren Zusammensetzungen aus

(A) Organosiliciumverbindungen, die Reste mit aliphatischen Kohlenstoff-Kohlenstoff-Mehrfachbindungen aufweisen,
(B) Si-gebundene Wasserstoffatome aufweisende Organosiliciumverbindungen und
(C) die Anlagerung von Si-gebundenen Wasserstoff an aliphatische Mehrfachbindung fördernde Katalysatoren,

die Si-gebundenen Wasserstoffatome aufweisenden Organosiliciumverbindungen (B) ganz oder teilweise ersetzen, eingesetzt werden.

Werden längere Verarbeitungszeiten gewünscht, können die erfindungsgemäßen vernetzbaren Zusammensetzungen als Bestandteil (B) neben den erfindungsgemäßen Organosiliciumverbindungen ($B^1$) auch andere bekannte Si-gebundene Wasserstoffatome aufweisende Organosiliciumverbindungen ($B^2$) enthalten.

Als Si-gebundene Wasserstoffatome aufweisende Organosiliciumverbindung ($B^2$) können daher vorzugsweise Organopolysiloxane aus Einheiten der Formel

$$H_kR_lSiO_{\frac{4-(k+l)}{2}},$$

wobei

R die oben dafür angegebene Bedeutung hat,
k 0 oder 1,
l 0, 1, 2 oder 3 und

die Summe k+l nicht größer als 3 ist,

bevorzugt solche der Formel

$$H_yR_{3-y}SiO(SiR_2O)_o(SiRHO)_pSiR_{3-y}H_y$$

wobei

R die oben dafür angegebene Bedeutung hat,
y 0 oder 1
o 0 oder eine ganze Zahl von 1 bis 100 und
p 0 oder eine ganze Zahl von 1 bis 100 ist,

mitverwendet werden.

Beispiele für solche Organopolysiloxane sind insbesondere Mischpolymerisate aus Dimethylhydrogensiloxan-, Methylhydrogensiloxan-, Dimethylsiloxan- und Trimethylsiloxaneinheiten, Mischpolymerisate aus Trimethylsiloxan-, Dimethylhydrogensiloxan- und Methylhydrogensiloxaneinheiten, Mischpolymerisate aus Trimethylsiloxan-, Dimethylsiloxan- und Methylhydrogensiloxaneinheiten, Mischpolymerisate aus Methylhydrogensiloxanund Trimethylsiloxaneinheiten, Mischpolymerisate aus Methylhydrogensiloxan-, Diphenylsiloxan- und Trimethylsiloxaneinheiten, Mischpolymerisate aus Methylhydrogensiloxan-, Dimethylhydrogensiloxan- und Diphenylsiloxaneinheiten, Mischpolymerisate aus Methylhydrogen-siloxan-, Phenylmethylsiloxan-, Trimethylsiloxan- und/oder Dimethylhydrogensiloxaneinheiten, Mischpolymerisate aus Methylhydrogensiloxan-, Dimethylsiloxan-, Diphenylsiloxan-, Trimethylsiloxan- und/oder Dimethylhydrogensiloxaneinheiten sowie Mischpolymerisate aus Dimethylhydrogensiloxan-, Trimethylsiloxan-, Phenylhydrogensiloxan-, Dimethylsiloxan- und/oder Phenylmethylsiloxaneinheiten.

Bestandteil (B) wird vorzugsweise in Mengen von 0,8 bis 5,0, bevorzugt 0,8 bis 2,5, besonders bevorzugt 1,0 bis 2,0 Grammatom Si-gebundenen Wasserstoff je Mol Si-gebundenen Restes mit aliphatischer Kohlenstoff-Kohlenstoff-Mehrfachbindung im Bestandteil (A) eingesetzt.

Als die Anlagerung von Si-gebundenem Wasserstoff an aliphatische Doppelbindung förderndem Katalysator (C) können auch bei den erfindungsgemäßen Zusammensetzungen die gleichen Katalysatoren verwendet werden, die auch bei den bisher bekannten Zusammensetzungen zum Vernetzen von aliphatische Mehrfachbindungen enthaltenden Organosiliciumverbindungen mit Verbindungen, die Si-gebundenen Wasserstoff enthalten, zur Förderung der Vernetzung eingesetzt werden konnten. Als Bestandteil (C) werden vorzugsweise die oben genannten Katalysatoren (3) verwendet.

Katalysator (C) wird vorzugsweise in Mengen von 5 bis 500 Gewichts-ppm (Gewichtsteilen je Million Gewichtsteilen), insbesondere 10 bis 200 Gewichts-ppm, jeweils berechnet als elementares Platinmetall und bezogen auf das Gesamtgewicht der Organosiliciumverbindungen (A) und (B), eingesetzt.

Beispiele für weitere Bestandteile, die bei den erfindungsgemäßen Zusammensetzungen mitverwendet werden können, sind die Anlagerung von Si-gebundenem Wasserstoff an aliphatische Mehrfachbindung bei Raumtemperatur verzögernde Mittel, sogenannte Inhibitoren (D), Mittel zur Einstellung der Trennkraft, Lösungsmittel, Haftvermittler und Pigmente.

Als Inhibitoren (D) können auch bei den erfindungsgemäßen Zusammensetzungen alle Inhibitoren verwendet werden, die auch bisher für den gleichen Zweck verwendet werden konnten. Beispiele für Inhibitoren sind 1,3-Divinyl-1,1,3,3-tetramethyldisiloxan, Benzotriazol, Dialkylformamide, Alkylthioharnstoffe, Methylethylketoxim, organische oder siliciumorganische Verbindungen mit einem Siedepunkt von mindestens 25°C bei 1012 mbar (abs.) und mindestens einer aliphatischen Dreifachbindung, wie 1-Ethinylcyclohexan-1-ol, 2-Methyl-3-butin-2-ol, 3-Methyl-1-pentin-3-ol, 2,5-Dimethyl-3-hexin-2,5-diol und 3,5-Dimethyl-1-hexin-3-ol, 3,7-Dimethyl-oct-1-in-6-en-3-ol, Inhibitoren wie eine Mischung aus Diallylmaleinat und Vinylacetat, Inhibitoren wie Maleinsäuremonoester, und Inhibitoren wie die Verbindung der Formel $HC{\equiv}C\text{-}C(CH_3)(OH)\text{-}CH_2\text{-}CH_2\text{-}CH{=}C(CH_3)_2$, käuflich erwerblich unter dem Handelsnamen "Dehydrolinalool" bei der Fa. BASF.

Vorzugsweise wird der Inhibitor (D) in Mengen von 0,01 bis 10 Gew.-%, bezogen auf das Gesamtgewicht der Organosiliciumverbindungen (A) und (B), eingesetzt.

Beispiele für Mittel zur Einstellung der Trennkraft der mit den erfindungsgemäßen Zusammensetzungen hergestellten klebrige Stoffe abweisenden Überzüge sind Siliconharze aus Einheiten der Formel

$$R^7(CH_3)_2SiO_{1/2} \text{ und } SiO_2 ,$$

sogenannte MQ-Harze, wobei $R^7$ ein Wasserstoffatom, ein Methylrest, ein Vinylrest oder ein Rest A, der in der eingangs zitierten US-A 5,241,034 beschrieben ist und daher zum Inhalt der Offenbarung der Anmeldung gehört, ist, und die Einheiten der Formel $R^7(CH_3)_2SiO_{1/2}$ gleich oder verschieden sein können. Das Verhältnis von Einheiten der Formel $R^7(CH_3)_2SiO_{1/2}$ zu Einheiten der Formel $SiO_2$ beträgt vorzugsweise 0,6 bis 2. Die Siliconharze werden vorzugsweise in Mengen von 5 bis 80 Gew.-%, bezogen auf das Gesamtgewicht der Organosiliciumverbindungen (A) und (B), eingesetzt.

Die bei den erfindungsgemäßen Zusammensetzungen gegebenenfalls mitverwendeten Lösungsmittel können die gleichen Lösungsmittel sein, die bei den bisher bekannten Zusammensetzungen aus Si-gebundene Vinylgruppen ausweisenden Organopolysiloxanen, Si-gebundenen Wasserstoff aufweisenden Organopolysiloxanen und die Anlagerung von Si-gebundenem Wasserstoff an aliphatische Doppelbindung förderndem Katalysator verwendet werden konnten. Beispiele für solche Lösungsmittel sind Benzine, z. B. Alkangemische mit einem Siedebereich von 80°C bis 140°C bei 1012 mbar (abs.), n-Heptan, Benzol, Toluol und Xylole, halogenierte Alkane mit 1 bis 6 Kohlenstoffatom (en), wie Methylenchlorid, Trichlorethylen und Perchlorethylen, Ether, wie Di-n-butylether, Ester, wie Ethylacetat, und Ketone, wie Methylethylketon und Cyclohexanon.

Werden organische Lösungsmittel mitverwendet, so werden sie zweckmäßig in Mengen von 10 bis 95 Gew.-%, bezogen auf das Gewicht der Organosiliciumverbindungen (A), eingesetzt.

Die Reihenfolge beim Vermischen der Bestandteile (A), (B), (C) und gegebenenfalls (D) ist zwar nicht entscheidend, für die Praxis hat es sich jedoch bewährt, den Bestandteil (C), also den Katalysator, dem Gemisch der anderen Bestandteile zuletzt zuzusetzen.

Die Vernetzung der erfindungsgemäßen Zusammensetzungen erfolgt vorzugsweise bei 50°C bis 150°C, bevorzugt 70°C bis 120°C. Ein Vorteil bei den erfindungsgemäßen Zusammensetzungen ist, daß eine rasche Vernetzung schon bei niedrigen Temperaturen erzielt wird. Als Energiequellen für die Vernetzung durch Erwärmen werden vorzugsweise Öfen, z.B. Umlufttrockenschränke, Heizkanäle, beheizte Walzen, beheizte Platten oder Wärmestrahlen des Infrarotbereiches verwendet.

Die erfindungsgemäßen Zusammensetzungen können außer durch Erwärmen auch durch Bestrahlen mit Ultraviolettlicht oder durch Bestrahlen mit UV- und IR-Licht vernetzt werden. Als Ultraviolettlicht wird üblicherweise solches mit einer Wellenlänge von 253,7 nm verwendet. Im Handel gibt es eine Vielzahl von Lampen, die Ultraviolettlicht mit einer Wellenlänge von 200 bis 400 nm aussenden und die Ultraviolettlicht mit einer Wellenlänge von 253,7 nm bevorzugt emittieren.

Das Auftragen von den erfindungsgemäßen Zusammensetzungen auf die klebrige Stoffe abweisend zu machenden Oberflächen kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravur-Überzugsvorrichtung, Messer- oder Rakel-Beschichtung oder mittels einer Luftbürste.

Bei den klebrige Stoffe abweisend zu machenden Oberflächen, die im Rahmen der Erfindung behandelt werden können, kann es sich um Oberflächen beliebiger, bei Raumtemperatur und 1012 mbar (abs.) fester Stoffe handeln. Beispiele für derartige Oberflächen sind diejenigen von Papier, Holz, Kork und Kunststoffolien, z. B. Polyethylenfolien oder Polypropylenfolien, gewebtem und ungewebtem Tuch aus natürlichen oder synthetischen Fasern oder Glasfasern, keramischen Gegenständen, Glas, Metallen, mit Polyethylen beschichtetem Papier und von Pappen,

einschließlich solcher aus Asbest. Bei dem vorstehend erwähnten Polyethylen kann es sich jeweils um Hoch-, Mittel- oder Niederdruck-Polyethylen handeln. Bei Papier kann es sich um minderwertige Papiersorten, wie saugfähige Papiere, einschließlich rohem, d. h. nicht mit Chemikalien und/oder polymeren Naturstoffen vorbehandelten Kraftpapier mit einem Gewicht von 60 bis 150 g/$m^2$, ungeleimte Papiere, Papiere mit niedrigem Mahlgrad, holzhaltige Papiere, nicht satinierte oder nicht kalandrierte Papiere, Papiere, die durch die Verwendung eines Trockenglättzylinders bei ihrer Herstellung ohne weitere aufwendigen Maßnahmen auf einer Seite glatt sind und deshalb als "einseitig maschinenglatte Papiere" bezeichnet werden, unbeschichtete Papiere oder aus Papierabfällen hergestellte Papiere, also um sogenannte Abfallpapiere, handeln. Bei dem erfindungsgemäß zu behandelnden Papier kann es sich aber auch selbstverständlich um hochwertige Papiersorten, wie saugarme Papiere, geleimte Papiere, Papiere mit hohem Mahlgrad, holzfreie Papiere, kalandrierte oder satinierte Papiere, Pergaminpapiere, pergamentisierte Papiere oder vorbeschichtete Papiere, handeln. Auch die Pappen können hoch- oder minderwertig sein.

Die erfindungsgemäßen Zusammensetzungen eignen sich beispielsweise zum Herstellen von Trenn-, Abdeck-, und Mitläuferpapieren, einschließlich Mitläuferpapieren, die bei der Herstellung von z. B. Gieß- oder Dekorfolien oder von Schaumstoffen, einschließlich solcher aus Polyurethan, eingesetzt werden. Die erfindungsgemäßen Zusammensetzungen eignen sich weiterhin beispielsweise zur Herstellung von Trenn-, Abdeck-, und Mitläuferpappen, -folien, und -tüchern, für die Ausrüstung der Rückseiten von selbstklebenden Bändern oder selbstklebenden Folien oder der beschrifteten Seiten von selbstklebenden Etiketten. Die erfindungsgemäßen Zusammensetzungen eignen sich auch für die Ausrüstung von Verpackungsmaterial, wie solchem aus Papier, Pappschachteln, Metallfolien und Fässern, z. B. Pappe, Kunststoff, Holz oder Eisen, das bzw. die für Lagerung und/oder den Transport von klebrigen Gütern, wie Klebstoffen, klebrigen Lebensmitteln, z. B. Kuchen, Honig, Bonbons und Fleisch, Bitumen, Asphalt, gefetteten Materialien und Rohgummi, bestimmt ist bzw. sind. Ein weiteres Beispiel für die Anwendung der erfindungsgemäßen Zusammensetzungen ist die Ausrüstung von Trägern zum Übertragen von Haftklebeschichten beim sogenannten "Transfer-Verfahren".

Die erfindungsgemäßen Zusammensetzungen eignen sich zur Herstellung der mit dem Trennpapier verbundenen Selbstklebematerialien sowohl nach dem off-line-Verfahren als auch nach dem in-line- Verfahren.

Beispiel 1:

Ein Equilibrat aus Hydrogendimethylsiloxan- und Trimethylsiloxaneinheiten im Molverhältnis 3 : 2, welches 8,26 g Si-gebundenen Wasserstoff enthält, wird mit 1,2,4-Trivinylcyclohexan unter Verwendung des Platin1,3-Divinyltetramethyldisiloxankomplexes (sogenannter Karstedt-Katalysator) bei 75°C so umgesetzt, daß das Verhältnis C=C/SiH genau 1,0 beträgt und der gesamte Ansatz ca. 4 ppm Pt (berechnet als Metall) enthält.
Das erhaltene Produkt aus Carbostruktureinheiten und Disiloxaneinheiten ist frei von Si-gebundenem Wasserstoff und enthält ausschließlich Trimethylsiloxaneinheiten als Endeinheiten. Das $^1$H-NMR-Spektrum bestätigt die vollständige Hydrosilylierung der eingesetzten Vinylgruppen.

53 g dieses Carbosiloxans (entsprechend 0,10 Mol substituiertes Cyclohexan) werden bei 120°C und 5 hPa ausgeheizt und mit 507 g eines Equilibrates aus Trimethylsiloxan-, Dimethylsiloxan-, und Hydrogenmethylsiloxaneinheiten der mittleren Kettenlänge von 106 Siloxaneinheiten und 0,61 Gew.-% Si-gebundenem Wasserstoff unter Verwendung von 200 ppm $PNCl_2$ bei 120°C equilibriert. Nach Neutralisation mit MgO (6 g), Filtration und Ausheizen (120°C/5 hPa) werden 506 g eines verzweigten Vernetzers mit 0,60 Gew.-% Si-gebundenem Wasserstoff und ca. 3 Gew.-% Carbostrukturanteil erhalten. Die Endgruppen werden ausschließlich von Trimethylsiloxaneinheiten gebildet.

Beispiel 2:

13,5 g 1,2,4-Trivinylcyclohexan werden mit 182 g eines $\alpha,\omega$-Dihydrogendimethylpolysiloxans mit 0,22 Gew.-% Si-gebundenem Wasserstoff homogen vermischt und mit 1 ppm Platin in Form des Karstedt-Katalysators zur Reaktion gebracht. Nach einer halben Stunde werden 80 mg $PNCl_2$ zugegeben und homogen verrührt, gefolgt von 195 g eines Equilibrates aus Hydrogenmethylsiloxan-, Dimethylsiloxan- und Trimethylsiloxaneinheiten mit einer durchschnittlichen Kettenlänge von 48 Siloxaneinheiten und 1,22 Gew.-% Si-gebundenem Wasserstoff. Die Komponenten werden bei 120°C zwei Stunden lang equilibriert und danach mit 8 g MgO neutralisiert. Filtration und Entfernung flüchtiger Bestandteile ergeben ein klares Öl mit einer Viskosität von 120 mm /s bei 25°C und 0,60 Gew.-% Si-gebundenem Wasserstoff Das Verhältnis der Endgruppen von Trimethylsiloxan- zu Hydrogendimethylsiloxaneinheiten beträgt 1 : 2.

Beispiel 3:

Wie in Beispiel 2 beschrieben, werden 1,2,4-Trivinylcyclohexan und das $\alpha,\omega$-Dihydrogendimethylpolysiloxan in den gleichen Mengen umgesetzt.
Nach einer halben Stunde Reaktionszeit bei ca. 90°C werden 18 g 1-Octen zugegeben und es wird eine weitere halbe

Stunde gerührt. Die weiteren Reaktionsschritte erfolgen analog zu Beispiel 2.
Nach Ausarbeitung wird ein klares Öl mit einer Viskosität von 124 $mm^2/s$ bei 25°C und 0,55 Gew.-% Si-gebundenem Wasserstoff erhalten. Das Verhältnis der Endgruppen von Trimethylsiloxanzu Octyldimethylsiloxaneinheiten beträgt 1 : 2.

Beispiel 4:

514 g eines kurzkettigen $\alpha,\omega$-Dihydrogendimethylpolysiloxans mit 1,05 Gew.-% Si-gebundenem Wasserstoff werden mit 1,6 mg Platin in Form des Karstedt-Katalysators versetzt und auf ca. 100°C erwärmt. Über einen Zeitraum von ca. einer Stunde werden 162 g 1,2,4-Trivinylcyclohexan zudosiert, wobei die Gemischtemperatur 134°C erreicht. Nach einer weiteren Stunde wird ausdestilliert, was an flüchtigen Komponenten noch vorhanden ist (3 hPa). Das Polyadditionsprodukt hat eine Viskosität von 187 $mm^2/s$ bei 25°C.
175 g dieses Carbosiloxans werden mit 350 g eines mit Trimethylsiloxaneinheiten endgestopperten Hydrogenmethylpolysiloxans mit 1,59 Gew.-% Si-gebundenem Wasserstoff unter Katalyse von 200 ppm $PNCl_2$ bei 120°C equilibriert. Nach drei Stunden wird abgekühlt und mit 11 g MgO neutralisiert. Filtration und Entfernung flüchtiger Bestandteile ergibt ein verzweigtes Equilibrat mit 1,10 Gew.-% Si-gebundenem Wasserstoff und einer Viskosität von 163 mm/s bei 25°C. Das Verhältnis von Hydrogenmethylsiloxan- zu Hydrogendimethylsiloxaneinheiten beträgt 94 : 6.

Beispiel 5 und Vergleichsversuch 1 und 2:

Es werden anwendungsfertige Formulierungen hergestellt, indem zu 1,00 kg eines $\alpha,\omega$-Divinyldimethylpolysiloxans der Jodzahl 6,6 nacheinander 2,5 g 1-Ethinylcyclohexanol und 10 g einer Lösung von Karstedt-Katalysator in Vinylpolymer (1,0 % Platin) zugegeben werden. Zum Vergleich werden die Mischungen mit jeweils verschiedenen Vernetzern versetzt:

a) 47 g des erfindungsgemäßen Carbosiloxanvernetzers von Beispiel 4 --> Beispiel 5
b) 33 g eines handelsüblichen, unverzweigten Vernetzers aus Hydrogenmethylsiloxan- und Trimethylsiloxaneinheiten mit 1,59 Gew.-% Si-gebundenem Wasserstoff --> Vergleichsversuch 1
c) 54 g eines stark verzweigten Vernetzers gemäß Beispiel 1 von DE-A 196 02 663, der Si-gebundene Wasserstoffatome ausschließlich in Hydrogendimethylsiloxaneinheiten aufweist --> Vergleichsversuch 2

Die Formulierungen sind mit jeweils 100 ppm Platin (berechnet als Metall) katalysiert und sind auf ein Verhältnis SiH/Si-Vinyl = 2,0 eingestellt.
Die gebrauchsfertigen Mischungen zeigen folgende in Tabelle 1 zusammengefaßte Gelzeiten:

Tabelle 1

| | Formulierung mit a) Beispiel 5 | Formulierung mit b) Vergleichsversuch 1 | Formulierung mit c) Vergleichsversuch 2 |
|---|---|---|---|
| Gelzeit [h] bei 25°C | >70 | >70 | 0,8 |

Aufgrund der viel zu kurzen Gelzeit und damit einer nicht akzeptablen Topfzeit der Formulierung mit Vernetzer c) wurde diese nicht bei folgenden Beschichtungsversuchen berücksichtigt:
Die Mischungen mit erfindungsgemäßem Vernetzer a) und dem Vergleichsvernetzer b) erfüllen die Forderung von mindestens 8 Stunden Verarbeitungszeit. Sie wurden zur Beschichtung von Glassinepapier in einer Pilot-Beschichtungsmaschine mit 2,8 m Trockenkanallänge und einer Umlufttemperatur von 130°C verwendet. Die Ergebnisse sind in Tabelle 2 zusammengefaßt.

Tabelle 2

| Bahngeschwindigkeit [m/min] | Formulierung mit a) Beispiel 5 extrahierbare, unvernetzte Beschichtungsbestandteile [%] | Formulierung mit b) Vergleichsversuch 2 extrahierbare, unvernetzte Beschichtungsbestandteile [%] |
|---|---|---|
| 10 | 2,1 | 4,4 |
| 30 | 2,3 | 5,7 |
| 50 | 3,3 | 10,8 |

Tabelle 2 (fortgesetzt)

| Bahngeschwindigkeit [m/min] | Formulierung mit a) Beispiel 5 extrahierbare, unvernetzte Beschichtungsbestandteile [%] | Formulierung mit b) Vergleichsversuch 2 extrahierbare, unvernetzte Beschichtungsbestandteile [%] |
|---|---|---|
| 70 | 3,9 | 21,8 |
| 100 | 8,6 | schmierig |
| 120 | 15,3 | flüssig |
| 150 | 32,3 | flüssig |

Die Beschichtungsformulierung mit erfindungsgemäßem Carbosiloxanvernetzer erlaubt somit ein Mehrfaches an Bahngeschwindigkeit zur Erzielung vergleichbarer Härtungsgüte.

## Patentansprüche

**1.** Vernetzbare Zusammensetzungen enthaltend

(A) Organosiliciumverbindungen, die Reste mit aliphatischen Kohlenstoff-Kohlenstoff-Mehrfachbindungen aufweisen
(B) Si-gebundene Wasserstoffatome aufweisende Organosiliciumverbindungen
(C) die Anlagerung von Si-gebundenem Wasserstoff an aliphatische Mehrfachbindung fördernde Katalysatoren und gegebenenfalls
(D) die Anlagerung von Si-gebundenem Wasserstoff an aliphatische Mehrfachbindung bei Raumtemperatur verzögernde Mittel,

dadurch gekennzeichnet, daß als mindestens ein Teil der (B) Si-gebundene Wasserstoffatome aufweisenden Organosiliciumverbindungen Organosiliciumverbindungen ($B^1$) enthaltend

(a) Einheiten der allgemeinen Formel

$$H_aR_{2-a}SiO_{2/2} \qquad (I)$$

wobei R gleich oder verschiedenen ist und einen einwertigen, von aliphatischen Mehrfachbindungen freien, gegebenenfalls halogenierten Kohlenwasserstoffrest mit 1 bis 8 Kohlenstoffatom(en) je Rest bedeutet und a 0, 1 oder 2 ist,
mit der Maßgabe, daß mindestens 20 Mol-% der Einheiten der Formel (I) solche mit a gleich 1 oder 2 sind,
(b) Carbostruktureinheiten G (II)
wobei G gleich oder verschieden ist und einen dreiwertigen bis zehnwertigen aliphatischen Kohlenwasserstoffrest mit 7 bis 30 Kohlenstoffatomen je Rest bedeutet, der ein oder mehrere Heteroatome ausgewählt aus der Gruppe von Sauerstoff, Bor, Silicium, Zinn oder Titan enthalten kann,
mit der Maßgabe, daß über G mindestens drei Si-Atome miteinander verbunden sind,
(c) Einheiten der allgemeinen Formel

$$R_b\overset{|}{Si}O_{\frac{3-b}{2}} \qquad (III)$$

und/oder

$$R_bSiO_{\frac{2-b}{2}} \quad (III')$$

wobei R die oben dafür angegebene Bedeutung hat,
b 0, 1 oder 2 ist, mit der Maßgabe, daß b in Formel (III') nicht 2 ist, und
mit der Maßgabe, daß die Einheiten der Formel (III) bzw. (III') über die Si-Atome mit den Carbostruktureinheiten G verbunden sind

und
(d) Einheiten der allgemeinen Formel

$$H_cR_{3-c}SiO_{1/2} \quad (IV)$$

wobei R die oben dafür angegebene Bedeutung hat,
c 0, 1 oder 2 ist, mit der Maßgabe, daß die Organosiliciumverbindungen ($B^1$) durchschnittlich mindestens 6 Si-gebundene Wasserstoffatome enthalten und je Molekül die Gesamtzahl der terminalen Si-gebundenen Wasserstoffatome kleiner ist als die Gesamtzahl aller über die Carbostruktureinheit G je Molekül miteinander verbundenen Si-Atome, verwendet werden.

**2.** Verwendung der vernetzbaren Zusammensetzungen nach Anspruch 1 zur Herstellung von klebrige Stoffe abweisenden Überzügen.

**3.** Si-gebundene Wasserstoffatome aufweisende Organosiliciumverbindungen ($B^1$) enthaltend

(a) Einheiten der allgemeinen Formel

$$H_aR_{2-a}SiO_{2/2} \quad (I)$$

wobei R gleich oder verschiedenen ist und einen einwertigen, von aliphatischen Mehrfachbindungen freien, gegebenenfalls halogenierten Kohlenwasserstoffrest mit 1 bis 8 Kohlenstoffatom(en) je Rest bedeutet und
a 0, 1 oder 2 ist,
mit der Maßgabe, daß mindestens 20 Mol-% der Einheiten der Formel (I) solche mit a gleich 1 oder 2 sind,
(b) Carbostruktureinheiten G (II)
wobei G gleich oder verschieden ist und einen dreiwertigen bis zehnwertigen aliphatischen Kohlenwasserstoffrest mit 7 bis 30 Kohlenstoffatomen je Rest bedeutet, der ein oder mehrere Heteroatome, ausgewählt aus der Gruppe von Sauerstoff, Bor, Silicium, Zinn oder Titan enthalten kann,
mit der Maßgabe, daß über G mindestens drei Si-Atome miteinander verbunden sind,
(c) Einheiten der allgemeinen Formel

$$R_bSiO_{\frac{3-b}{2}} \quad (III)$$

und/oder

$$R_b\overset{|}{\underset{|}{Si}}O_{\frac{2-b}{2}} \qquad (III')$$

wobei R die oben dafür angegebene Bedeutung hat,
b 0, 1 oder 2 ist, mit der Maßgabe, daß b in Formel (III') nicht 2 ist, und
mit der Maßgabe, daß die Einheiten der Formel (III) bzw. (III') über die Si-Atome mit den Carbostruktureinheiten G verbunden sind

und
d) Einheiten der allgemeinen Formel

$$H_cR_{3-c}SiO_{1/2} \qquad (IV)$$

wobei R die oben dafür angegebene Bedeutung hat,
c 0, 1 oder 2 ist, mit der Maßgabe, daß die Si-gebundene Wasserstoffatome aufweisenden Organosiliciumverbindungen ($B^1$) durchschnittlich mindestens 6 Si-gebundene Wasserstoffatome enthalten und je Molekül die Gesamtzahl der terminalen Si-gebundenen Wasserstoffatome kleiner ist als die Gesamtzahl aller über die Carbostruktureinheit G je Molekül miteinander verbundenen Si-Atome.

**4.** Verfahren zur Herstellung der Si-gebundenen Wasserstoffatome aufweisenden Organosiliciumverbindungen ($B^1$) nach Anspruch 3, dadurch gekennzeichnet, daß
in einem ersten Schritt
aliphatische Mehrfachbindungen aufweisende aliphatische Kohlenwasserstoffverbindungen (1) mit 7 bis 30 Kohlenstoffatomen, die jeweils ein oder mehrere Heteroatome, ausgewählt aus der Gruppe von Sauerstoff, Bor, Silicium, Zinn und Titan enthalten können,
mit Siloxanen (2) der allgemeinen Formel

$$R^1R_2SiO(R_2SiO)_dSiR_2R^1$$

wobei

R die oben dafür angegebene Bedeutung hat,
$R^1$ die gleiche Bedeutung wie R hat oder ein Wasserstoffatom bedeutet, mit der Maßgabe, daß mindestens 50 Mol-% der Reste $R^1$ Wasserstoffatome sind und
d 0 oder eine ganze Zahl im Wert von 1 bis 200 ist,
in Gegenwart von die Anlagerung von Si-gebundenem Wasserstoff an aliphatische Mehrfachbindung fördernden Katalysatoren (3) umgesetzt werden,
wobei das eingesetzte Verhältnis von Si-gebundenem Wasserstoff in Siloxan (2) zu aliphatischer Doppelbindung in Kohlenwasserstoffverbindung (1) 1,0 bis 5,0 beträgt,
die so erhaltenen Verbindungen gegebenenfalls mit $C_4$- bis $C_{22}$-Alkenen (4), die endständige aliphatische Doppelbindung aufweisen, in Gegenwart von die Anlagerung von Si-gebundenem Wasserstoff an aliphatische Mehrfachbindung fördernden Katalysatoren (3) weiter umgesetzt werden,
und in einem zweiten Schritt
die im ersten Verfahrensschritt erhaltenen Verbindungen mit Si-gebundene Wasserstoffatome aufweisenden Organopolysiloxanen (5), die Einheiten der Formel (I) enthalten, equilibriert werden,
mit der Maßgabe, daß die so erhaltenen Si-gebundene Wasserstoffatome aufweisenden Organosiliciumverbindungen ($B^1$) durchschnittlich mindestens 20 Mol-% Einheiten der Formel (I) mit a gleich 1 oder 2 und mindestens 6 Si-gebundene Wasserstoffatome aufweisen, und je Molekül ($B^1$) die Gesamtzahl der terminalen Si-gebundenen Wassertoffatome kleiner ist als die Gesamtzahl aller über die Carbostruktureinheit G je Molekül miteinander verbundenen Si-Atome.

5. Verfahren nach Anspruch 4, dadurch gekennzeichnet, daß als Kohlenwasserstoffverbindung (1) 1,2,4-Trivinylcyclohexan verwendet wird.

6. Verfahren nach Anspruch 4 oder 5, dadurch gekennzeichnet, daß als Siloxane (2) solche der allgemeinen Formel

$$HR_2SiO(R_2SiO)_dSiR_2H$$

wobei R und d die im Anspruch 4 dafür angegebene Bedeutung haben, verwendet werden.

7. Verfahren nach Anspruch 4, 5 oder 6, dadurch gekennzeichnet, daß als Si-gebundene Wasserstoffatome aufweisende Organopolysiloxane (5) solche ausgewählt aus der Gruppe bestehend aus linearen, endständige Triorganosiloxygruppen aufweisenden Organopolysiloxanen der Formel

$$R_3'SiO(SiR_2'O)_rSiR_3',$$

wobei

R' die gleiche Bedeutung wie R hat oder ein Wasserstoffatom bedeutet,
r 0 oder eine ganze Zahl im Wert von 1 bis 500, bevorzugt 10 bis 200, ist,
linearen, endständige Hydroxylgruppen aufweisenden Organopolysiloxanen der Formel

$$HO(SiR_2'O)_sH,$$

wobei R' die oben dafür angegebene Bedeutung hat und
s eine ganze Zahl im Wert von 1 bis 1000, bevorzugt 10 bis 500, ist,

verzweigten, gegebenenfalls Hydroxylgruppen aufweisenden Organopolysiloxanen aus Einheiten der Formel

$$R_3'SiO_{1/2},\ R_2'SiO \text{ und } R'SiO_{3/2},$$

wobei R' die oben dafür angegebene Bedeutung hat,
cyclischen Organopolysiloxanen der Formel

$$(R_2'SiO)_t,$$

wobei R' die oben dafür angegebene Bedeutung hat und
t eine ganze Zahl von 3 bis 12 ist,
und Mischpolymerisaten aus Einheiten der Formel

$$R_2'SiO \text{ und } R'SiO_{3/2},$$

wobei R' die oben dafür angegebene Bedeutung hat,
eingesetzt werden.

**Claims**

1. Crosslinkable composition comprising

(A) organosilicon compounds which contain radicals having aliphatic carbon-carbon multiple bonds,
(B) organosilicon compounds containing Si-bonded hydrogen atoms,
(C) catalysts which promote the addition of Si-bonded hydrogen onto aliphatic multiple bonds and, if desired

(D) agents which inhibit the addition of Si-bonded hydrogen onto aliphatic multiple bonds at room temperature,

characterized in that at least part of the organosilicon compounds containing Si-bonded hydrogen atoms (B) used are organosilicon compounds ($B^1$) comprising

(a) units of the formula

$$H_aR_{2-a}SiO_{2/2} \quad (I)$$

where R are identical or different and are each a monovalent, halogenated or unhalogenated hydrocarbon radical which is free of aliphatic multiple bonds and has from 1 to 8 carbon atom(s) per radical and
a is 0, 1 or 2,
with the proviso that at least 20 mol% of the units of the formula (I) are ones in which a is 1 or 2,
(b) carbostructural units G (II)
where G are identical or different and are each a trivalent to decavalent aliphatic hydrocarbon radical having from 7 to 30 carbon atoms per radical which may contain one or more heteroatoms selected from the group consisting of oxygen, boron, silicon, tin or titanium,
with the proviso that at least three Si atoms are connected to one another via G,
(c) units of the formula

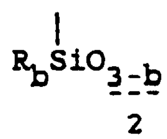 (III)

and/or

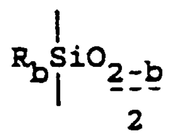 (III')

where R is as defined above,
b is 0 1 or 2, with the proviso that b in formula (III') is not 2, and
with the proviso that the units of the formula (III) or (III') are connected via the Si atoms to the carbostructural units G

and
(d) units of the formula

$$H_cR_{3-c}SiO_{1/2} \quad (IV)$$

where R is as defined above,
c is 0, 1 or 2, with the proviso that the organosilicon compounds ($B^1$) contain on average at least 6 Si-bonded hydrogen atoms and, in each molecule, the total number of terminal Si-bonded hydrogen atoms is less than the total number of all Si atoms connected to one another in the molecule via the carbostructural unit G.

**2.** Use of a crosslinkable composition according to Claim 1 for producing coatings which repel sticky materials.

**3.** Organosilicon compound ($B^1$) which contains Si-bonded hydrogen atoms and comprises

(a) units of the formula

$$H_aR_{2-a}SiO_{2/2} \qquad (I)$$

where R are identical or different and are each a monovalent, halogenated or unhalogenated hydrocarbon radical which is free of aliphatic multiple bonds and has from 1 to 8 carbon atom(s) per radical and
a is 0, 1 or 2,
with the proviso that at least 20 mol% of the units of the formula (I) are ones in which a is 1 or 2,
(b) carbostructural units G (II)
where G are identical or different and are each a trivalent to decavalent aliphatic hydrocarbon radical having from 7 to 30 carbon atoms per radical which may contain one or more heteroatoms selected from the group consisting of oxygen, boron, silicon, tin or titanium,
with the proviso that at least three Si atoms are connected to one another via G,
(c) units of the formula

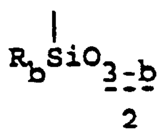
(III)

and/or

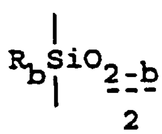
(III')

where R is as defined above,
b is 0, 1 or 2, with the proviso that b in formula (III') is not 2, and
with the proviso that the units of the formula (III) or (III') are connected via Si atoms to the carbostructural units G and
(d) units of the formula

$$H_cR_{3-c}SiO_{1/2} \qquad (IV)$$

where R is as defined above,
c is 0, 1 or 2,

with the proviso that the organosilicon compounds ($B^1$) containing Si-bonded hydrogen atoms contain, on average, at least 6 Si-bonded hydrogen atoms and, in each molecule, the total number of terminal Si-bonded hydrogen atoms is less than the total number of all Si atoms connected to one another in the molecule via che carbostructural unit G.

**4.** Process for preparing organosilicon compounds ($B^1$) containing Si-bonded hydrogen atoms according to Claim 3, characterized in that, in a first step, aliphatic hydrocarbon compounds (1) containing aliphatic multiple bonds and having from 7 to 30 carbon atoms, which may each contain one or more heteroatoms selected from the group consisting of oxygen, boron, silicon, tin and titanium, are reacted
with siloxanes (2) of the formula

$$R^1R_2SiO(R_2SiO)_dSiR_2R^1$$

where R is as defined above,
$R^1$ is as defined for R or is a hydrogen atom, with the proviso that at least 50 mol% of the radicals $R^1$ are hydrogen atoms and
d is 0 or an integer from 1 to 200,
in the presence of catalysts (3) which promote the addition of Si-bonded hydrogen onto aliphatic multiple bonds, where the ratio of Si-bonded hydrogen in siloxane (2) to aliphatic double bonds in hydrocarbon compound (1) is from 1.0 to 5.0,
if desired, the compounds obtained in this way are further reacted with $C_4$- to $C_{22}$ alkenes (4) having a terminal aliphatic double bond in the presence of catalysts (3) which promote the addition of Si-bonded hydrogen onto aliphatic multiple bonds,
and, in a second step,
the compounds obtained in the first process step are equilibrated with organopolysiloxanes (5) which contain Si-bonded hydrogen atoms and comprise units of the formula (I),
with the proviso that the resulting organosilicon compounds ($B^1$) containing Si-bonded hydrogen atoms comprise, on average, at least 20 mol% of units of the formula (I) in which a is 1 or 2 and at least 6 Si-bonded hydrogen atoms and, in each molecule ($B^1$), the total number of terminal Si-bonded hydrogen atoms is less than the total number of all Si atoms connected to one another in the molecule via the carbostructural unit G.

**5.** Process according to Claim 4, characterized in that the hydrocarbon compound (I) used is 1,2,4-trivinylcyclohexane.

**6.** Process according to Claim 4 or 5, characterized in that siloxanes (2) used are those of the formula

$$HR_2SiO(R_2SiO)_dSiR_2H$$

where R and d are as defined in Claim 4.

**7.** Process according to Claim 4, 5 or 6, characterized in that the organopolysiloxanes (5) containing Si-bonded hydrogen atoms which are used are ones selected from the group consisting of linear organopolysiloxanes having terminal triorganosiloxy groups and having the formula

$$R_3'SiO(SiR_2'O)_rSiR_3',$$

where R' is as defined for R or is a hydrogen atom,
r is 0 or an integer from 1 to 500, preferably from 10 to 200,
linear organopolysiloxanes having terminal hydroxyl groups and having the formula

$$HO(SiR_2'O)_sH,$$

where R' is as defined above and
s is an integer from 1 to 1000, preferably from 10 to 500,
branched organopolysiloxanes which may contain hydroxyl groups and comprise units of the formula

$$R_3'SiO_{1/2},\ R_2'SiO \text{ and } R'SiO_{3/2},$$

where R' is as defined above,
cyclic organopolysiloxanes of the formula

$$(R_2'SiO)_t,$$

where R' is as defined above and
t is an integer from 3 to 12,
and copolymers comprising units of the formula

$$R_2'SiO \text{ and } R'SiO_{3/2},$$

where R' is as defined above.

## Revendications

**1.** Compositions réticulables contenant

(A) des composés d'organosilicium, qui présentent des radicaux avec des liaisons aliphatiques multiples carbone-carbone;
(B) des composés d'organosilicium présentant des atomes d'hydrogène liés par Si;
(C) l'addition d'hydrogène lié par Si à des catalyseurs favorisant une liaison aliphatique multiple, et le cas échéant
(D) l'addition d'hydrogène lié par Si à des agents retardant une liaison aliphatique multiple à température ambiante,

caractérisées en ce qu'on utilise comme au moins une partie des composés d'organosilicium présentant des atomes d'hydrogène liés par Si (B), des composés d'organosilicium ($B^1$) contenant

(a) des unités de formule générale

$$H_aR_{2-a}SiO_{2/2} \qquad (I)$$

dans laquelle R est identique ou différent et signifie un radical hydrocarboné monovalent avec 1 à 8 atome(s) de carbone par radical, exempt de liaisons multiples aliphatiques, le cas échéant halogéné et
a est 0, 1 ou 2,
étant entendu qu'au moins 20% en mole des unités de la formule (I) sont ceux où a est égal à 1 ou 2,
(b) des unités G à structure carbonée (II) dans lequelles G est identique ou différent et signifie un radical hydrocarboné aliphatique trivalent à décavalent avec 7 à 30 atomes de carbone par radical, qui peut contenir un ou plusieurs hétéroatomes sélectionnés parmi le groupe de l'oxygène, du bore, du silicium, de l'étain ou du titane,
étant entendu qu'au moins trois atomes de Si sont liés entre eux par G,
(c) des unités de formule générale

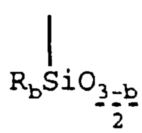
(III)

et/ou

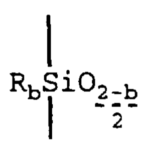
(III')

dans lesquelles R a la signification indiquée plus haut,
b est 0, 1 ou 2, étant entendu que b n'est pas 2 dans la formule (III'), et
étant entendu que les unités de la formule (III) ou selon le cas (III') sont liées aux unités G à structure carbonée par les atomes de Si

et
(d) des unités de formule générale

$$H_cR_{3-c}SiO_{1/2} \qquad (IV)$$

dans laquelle R a la signification indiquée plus haut, c est 0, 1 ou 2,
étant entendu que les composés d'organosilicium ($B^1$) contiennent en moyenne au moins 6 atomes d'hydrogène liés par Si et que pour chaque molécule, le nombre total des atomes terminaux d'hydrogène liés par Si est inférieur au nombre total de tous les atomes de Si liés entre eux par l'unité G à structure carbonée pour chaque molécule.

**2.** Utilisation des compositions réticulables suivant la revendication 1 pour la préparation d'enduits antiadhésifs.

**3.** Composés d'organosilicium ($B^1$) présentant des atomes de carbone liés par Si contenant

(a) des unités de formule générale

$$H_aR_{2-a}SiO_{2/2} \qquad (I)$$

dans laquelle R est identique ou différent et signifie un radical hydrocarboné monovalent avec 1 à 8 atome(s) de carbone par radical, exempt de liaisons aliphatiques multiples, le cas échéant halogéné et
a est 0, 1 ou 2
étant entendu qu'au moins 20% en mole des unités de la formule (I) sont celles où a est égal à 1 ou 2,
(b) des unités G à structure carbonée (II)
dans lesquelles G est identique ou différent et signifie un radical hydrocarboné aliphatique trivalent à décavalent avec 7 à 30 atomes de carbone par radical, qui peut contenir un ou plusieurs hétéroatomes sélectionnés parmi le groupe de l'oxygène, du bore, du silicium, de l'étain ou du titane,
étant entendu qu'au moins trois atomes de Si sont liés entre eux par G,
(c) des unités de formule générale

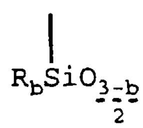
(III)

et/ou

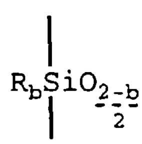
(III')

dans lesquelles R a la signification indiquée plus haut,
b est 0, 1 ou 2, étant entendu que b n'est pas 2 dans la formule (III'), et
étant entendu que les unités de la formule (III) ou selon le cas (III') sont liées aux unités G à structure carbonée par les atomes de Si
et
(d) des unités de formule générale

$$H_cR_{3-c}SiO_{1/2} \qquad (IV)$$

dans laquelle R a la signification indiquée plus haut, c est 0, 1 ou 2, étant entendu que les composés d'organosilicium ($B^1$) présentant des atomes d'hydrogène liés par Si contiennent en moyenne au moins 6 atomes d'hydrogène liés par Si, et pour chaque molécule le nombre total des atomes d'hydrogène terminaux liés par Si est inférieur au nombre total de tous les atomes de Si liés entre eux par l'unité G à structure carbonée pour chaque molécule.

**4.** Procédé pour la préparation des composés d'organosilicium ($B^1$) présentant des atomes d'hydrogène liés par Si suivant la revendication 3, caractérisé en ce que, dans une première étape, des composés hydrocarbonés aliphatiques (1) avec 7 à 30 atomes de carbone, présentant des liaisons aliphatiques multiples, qui peuvent chacun contenir un ou plusieurs hétéroatomes, sélectionnés parmi le groupe de l'oxygène, du bore, du silicium, de l'étain et du titane,
sont transformés avec des siloxanes (2) de formule générale

$$R^1R_2SiO(R_2SiO)_dSiR_2R^1$$

dans laquelle R a la signification indiquée plus haut,
$R^1$ a la même signification que R ou signifie un atome d'hydrogène, étant entendu qu'au moins 50% en mole des radicaux $R^1$ sont des atomes d'hydrogène, et
d est 0 ou un nombre entier dont la valeur est de 1 à 200,
en présence de catalyseurs (3) favorisant l'addition d'hydrogène lié par Si à une liaison aliphatique multiple,
le rapport utilisé de l'hydrogène lié par Si dans un siloxane (2) à la double liaison aliphatique dans un composé hydrocarboné (1) étant de 1,0 à 5,0,
les composés ainsi obtenus, étant le cas échéant transformés avec des alcènes en $C_4$ à $C_{22}$, (4) qui présentent des doubles liaisons aliphatiques terminales, en présence de catalyseurs (3) favorisant l'addition d'hydrogène lié par Si à une liaison aliphatique multiple,
et en ce que, dans une deuxième étape
les composés obtenus dans la première étape du procédé sont équilibrés avec des organopolysiloxanes (5) présentant des atomes d'hydrogène liés par Si, qui contiennent les unités de formule (I),
étant entendu que les composés d'organosilicium ($B^1$) présentant des atomes d'hydrogène liés par Si ainsi obtenus présentent en moyenne au moins 20% en mole d'unités de la formule (I) où a est égal à 1 ou 2 et au moins 6 atomes d'hydrogène liés par Si, et pour chaque molécule (B') le nombre total des atomes d'hydrogène terminaux liés par Si est inférieur au nombre total de tous les atomes de Si liés entre eux par l'unité G à structure carbonée pour chaque molécule.

**5.** Procédé suivant la revendication 4, caractérisé en ce que du 1,2,4-trivinylcyclohexane est utilisé comme composé hydrocarboné (1).

**6.** Procédé suivant la revendication 4 ou 5, caractérisé en ce que sont utilisés comme siloxanes (2) ceux de formule générale

$$HR_2SiO(R_2SiO)_dSiR_2H$$

dans laquelle R et d ont la signification indiquée à la revendication 4.

**7.** Procédé suivant la revendication 4, 5 ou 6, caractérisé en ce que sont utilisés comme organopolysiloxanes (5) présentant des atomes d'hydrogène liés par Si ceux sélectionnés parmi le groupe constitué d'organopolysiloxanes linéaires présentant des groupements terminaux linéaires triorganosiloxy, de formule

$$R_3'SiO(SiR_2'O)_rSiR_3',$$

dans laquelle R' a la même signification que R ou signifie un atome d'hydrogène,
r est 0 ou un nombre entier dont la valeur est de 1 à 500, de préférence de 10 à 200,
d'organopolysiloxanes linéaires présentant des groupements terminaux, de formule

$$HO(SiR_2'O)_sH,$$

dans laquelle R' a la signification indiquée plus haut et s est un nombre entier dont la valeur est de 1 à 1000, de préférence de 10 à 500,
d'organopolysiloxanes ramifiés, présentant le cas échéant des groupements hydroxyle, composés d'unités de formule

$$R_3'SiO_{1/2}, R_2'SiO \text{ et } R'SiO_{3/2},$$

dans laquelle R' a la signification indiquée plus haut, d'organopolysiloxanes cycliques de formule

$$(R_2'SiO)_t,$$

dans laquelle R' a la signification indiquée plus haut et t est un nombre entier de 3 à 12,
et de copolymères composés d'unités de formule

$$R_2'SiO \text{ et } R'SiO_{3/2},$$

dans laquelle R' a la signification indiquée plus haut.